# EUROPEAN PATENT APPLICATION

(11) **EP 1 947 573 A1**
(43) Date of publication of application: **23.07.2008**
(21) Application number: 08150267.6
(22) Date of filing: 15.01.2008
(51) Int. Cl.: G06F 17/21, G10L 13/04

(54) **Document information workflow**

(30) Priority: 16.01.2007 US 654167
(71) Applicant: Xerox Corporation, Rochester, New York 14644 (US)
(72) Inventor: Harrington, Steven J., Webster, NY 14580 (US); Reid, James Walter, Brockport, NY 14420 (US); Karlsson, Mans Jonas Daniel, Rochester, NY 14618 (US)
(74) Representative: Grünecker, Kinkeldey, Stockmair & Schwanhäusser Anwaltssozietät

(57) **Abstract**

A method is presented for extracting information from a document by separating the document into segments and organizing the segments into a hierarchical structure. An audio rendition of the segments is generated and presented aurally to the user for selection of the segment to be presented. The selected segment is then presented aurally to the user. If desired an audio rendition of a summary may be generated and presented aurally to the user.

## Description

### BACKGROUND

The present disclosure relates to extracting and presenting information from a document to the user and particularly, relates to such an operation where it is desirable to eliminate the need for the user to read an entire printed document or text presentation of the document on a screen. In particular, the disclosure addresses the situation where the user does not wish or is unable to devote the time required for reading the entire document, but wishes to obtain specific bits of information from the document; and, also relates to situations where the user is otherwise occupied and is unable to submit to the distraction of reading, for example, where the user is operating a vehicle or craft. Currently, portable electronic devices permit access through the internet to personal, private and public databases which contain vast numbers of documents and information which a user often wishes to access for the limited purpose of obtaining specific information from a particular document or set of documents such as those contained n the user's own electronic files or electronic files available to the public. Heretofore, although the user could readily access such documents remotely through a portable electronic device connected to the internet, the document accessed was presented on a screen or a series of screens in its entirety for visual discernment. Often this required the user to stop the activity in which the user was currently engaged in order to read the document. This situation often prevented the user from obtaining the desired information remotely, for example, where the user was driving a vehicle or where the document was sufficiently lengthy that taking the time to read the document to obtain the desired information was impractical at the time the information was sought.

Although arrangements for generating an audio rendition from a document, so that the user could listen to the document being read have been available, the user has been required listen to the reading of the entire document in order to obtain the information contained in the document. An early example of such an arrangement are "talking books" or sound recorded readings of books which are available from public libraries. Currently, computer programs are available for converting text to voice or audio renditions of the text. However, these renditions also required listening to the audio rendition of the entire document.

Thus, it has been desirable to provide a way or means of permitting a user to obtain specific information from a document and present the information to the user in a manner which does not require the user to read the entire document or to read at all. It has further been desired to provide for extracting certain information from a document and presenting the information to the user in a manner not requiring the user to read it.

### BRIEF DESCRIPTION

The present disclosure describes a method of extracting and presenting specific information from a document such as, for example, a printed document and presenting the information to the user in either an audio rendition or alternatively, if desired, on a screen as a visual presentation. In one version of the method of the present disclosure, the system converts the text of a printed document to an electronic format and separates the document into segments and organizes the segments into an hierarchical order. The results of the organization are then presented to the user either in audio rendition or visually if desired for user selection of the specific portions of the structure to be presented. The system then automatically presents the selected portions of the structure of the document to the user. In another exemplary embodiment or version of the method of the present disclosure, the system generates a summary of the document which may be presented to the user along with the hierarchical organization; and, the user may, for example, select to only hear or read the summary of the document. Where audio renditions of the selected information from the document are presented to the user, the present method enables the user to obtain the desired information without visual distraction from the user's current activities. The user's input for selection of specific information from the presentation to the user may also be made audibly, if voice recognition programming is employed in the system.
In one embodiment of the method defined in claim 1, the structure is presented as a hierarchy of menu items.
In a further embodiment the step of selecting includes navigating the structure by menu selection.
In a further embodiment the step of separating the document includes generating a summary and attaching the summary to the document.
In a further embodiment the step of organizing the segments includes referencing the summary.
In a further embodiment the step of presenting the structure to the user includes presenting an audio rendition of the summary.
In a further embodiment the step of presenting includes presenting a summary on a screen for user viewing.
In a further embodiment the step of separating the document includes generating a table of contents and attaching the table of contents to the document.
In a further embodiment the step of organizing the segments includes referencing the table of contents.
In a further embodiment the step of presenting the structure to the user includes presenting an audio rendition of the table of contents.
In a further embodiment the step of presenting includes presenting the table of contents on a screen for user viewing.
In a further embodiment the step of separating the document includes generating an index and attaching the index to the document.
In a further embodiment the step of organizing the segments includes referencing the index.
In a further embodiment the step of presenting the structure to the user includes presenting an audio rendition of the index.
In a further embodiment the step of presenting includes presenting the index on a screen for user viewing.
In one embodiment of the method defined in claim 8, the step of presenting the hierarchical structure includes user navigating the structure by one of voice commands and manual input.
In a further embodiment the step of generating an audio rendition includes using a text-to-speech computer program.
In a further embodiment the step of separating the documents includes generating a summary.
In a further embodiment the step of organizing the segments includes referencing the summary.
In a further embodiment the step of generating a summary includes generating an audible rendition.
In a further embodiment the step of organizing the segments includes automatically generating a summary.
In a further embodiment the step of organizing the segments includes automatically generating a table of contents.
In a further embodiment the step of organizing the segments includes automatically generating an index.

### BRIEF DESCRIPTION OF THE DRAWINGS

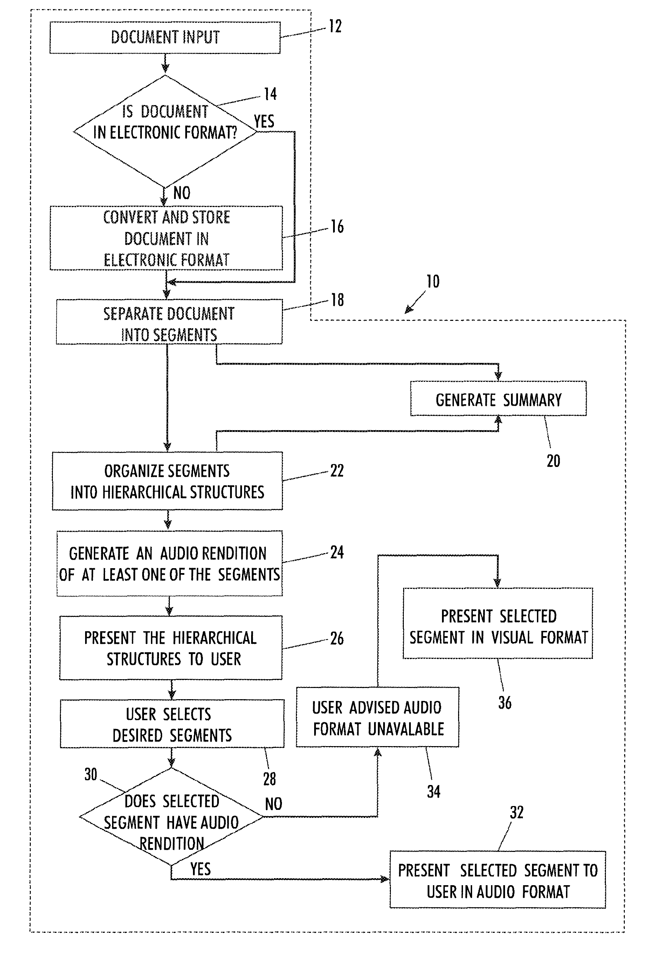

The method of the present invention is presented in block flow diagram form in the sole drawing.

### DETAILED DESCRIPTION

The present disclosure describes a method of extracting information from a document, such as a printed document, and presenting to the user the extracted information. The method disclosed provides for the presentation in an audio rendition or audible form in the event that the user does not wish the presentation to be made on a screen or in a visually discernable manner.

The system employed for practicing the disclosed method may utilize any of several commercially available text-to-speech software or computer programs for implementing the user presentation in the audio rendition.

The document is segmented; and, upon the user receiving a hierarchically organized structural presentation of the document segments, either in the audio rendition, or alternatively on a display screen, which may include a summary, the user then selects the segments of the document to be presented. The selection may be done orally by the user through voice recognition programming if this function is employed. Any of the voice-to-text or voice recognition computer programs or software commercially available may be employed to permit the user to input the user's selection(s) by voice to the system. The disclosed method enables the user to obtain desired information from a document without being distracted visually or tactilely such as, for example, requiring visual reading from a screen or entering manual inputs to a key pad.

This function thus renders the present method particularly suitable and useful for persons occupied manually and visually, as for example, while driving or piloting a craft. The method of the present invention would thus allow a user to obtain needed information from reference documents such as for business or personal entertainment while driving a vehicle without visual distraction of the driver's eyes from the road. Another example of using the method of the present disclosure would enable an aircraft pilot to orally request the instrument approach procedure from the printed instruction diagrams, for a particular airport while in route. Upon reaching a predetermined proximity of the airport, the system would issue aural instructions for the aircraft heading, speed and rate of descent based upon the aircraft's instantaneous position as determined from the aircraft's onboard GPS receiver. The disclosed method would thus eliminating the necessity of the present practice of a printed document being clipped to the aircraft control yoke for visual reference by the pilot during an instrument approach, thereby eliminating the distraction of the pilot's vision from the flight altitude instruments and the need to mentally correlate the aircraft's position to a location on the printed approach procedure.

Referring to the drawing, the system for practicing the method is indicated generally at 10 and receives the document input at step 12 and proceeds to step 14 and inquires as to whether the document is in written form or electronic format whereupon, if the inquiry is negative, the system responds by proceeding to step 16 and converts the document to electronic format. If however, the determination in step 14 is affirmative, the system proceeds directly to step 18 and separates the document into segments. If desired, the system may alternatively proceed to step 20 to generate a summary of the document and then proceed to step 22 and organize the segments of step 18 into an hierarchical structure such as, for example, by paragraph or numbered section, if any, or by heading or subheading. The system then proceeds to step 24 and generates an audio rendition of at least one of the segments; and, an audio rendition of the hierarchical structure is then presented to the user at step 26. If desired, the summary generated at step 20 may also be presented in an audio rendition to the user at step 26.

The system then proceeds to step 28 where the user selects the desired segment from the hierarchical structure or summary presented at step 26.

The system then proceeds to step 30 and determines if the selected segment has an audio rendition; and, if the query is answered in the affirmative, the system proceeds to step 32 and presents the selected segment to the user in an audio format. However, if the determination in step 30 is in the negative, the system advises the user at step 34 that an audio format is not available and proceeds to present the selected segment in visual format at step 36 if provision has been made for such a presentation.

The method of the present disclosure thus enables a user to receive information from a document in audible form without listening to a reading of the complete document. The method permits a printed document to be converted to electronic format and separated into segments which are then organized into a hierarchical structure with an audio rendition generated which presents the hierarchical structure to the user for selection of a desired segment. Upon receipt of the selection the present method presents the audio rendition of the segment to the user; and, if an audio rendition is unavailable, so advises the user and may present the selected segment in visual format if provision has been made for such a presentation.

## Claims

1. A method of presenting a document comprising:
(a) separating the document into a plurality of segments;
(b) organizing the segments in a hierarchical structure;
(c) presenting the hierarchical structure to the user for selecting a desired segment; and,
(d) generating an audio rendition of the selected segment and presenting the audio rendition to the user.

2. The method defined in claim 1, further comprising the step of converting a printed document text to electronic format prior to the step of separating.

3. The method defined in claim 1, wherein the step of organizing includes generating an audio rendition of the structure and appending it to the document.

4. The method defined in claim 3, wherein the step of presenting the document structure includes presenting an audio rendition of the structure.

5. The method defined in claim 2, wherein the step of organizing the segments includes attaching a textual representation to the document.

6. The method defined in claim 1, wherein the step of selecting includes navigating the structure by voice commands.

7. The method defined in claim 1, wherein the step of presenting includes presenting the structure on a screen for user viewing.

8. A method of presenting a document comprising:
(a) separating the document into a plurality of segments;
(b) organizing the segments in a hierarchical structure;
(c) generating an audio rendition of at least one of the segments;
(d) presenting the hierarchical structure to the user for selection of a desired segment; and,
(e) presenting the selected segment to the user in a form selected from one of audibly and visually.

9. The method defined in claim 8, further comprising the step of converting printed document text to electronic format prior to the separating step.

10. A method of presenting a printed document comprising:
(a) converting the printed document to an electronic format;
(b) separating the converted document into a plurality of electronic segments;
(c) organizing the segments in an hierarchical structure;
(d) presenting the hierarchical structure to the user in one of an audio and visual format for selecting a desired segment; and,
(e) generating an audio rendition of the selected segment and presenting the audio rendition to the user.
